# EUROPÄISCHE PATENTSCHRIFT

(11) **EP 2 705 593 B1**
(45) Veröffentlichungstag und Bekanntmachung des Hinweises auf die Patenterteilung: **26.08.2015**
(21) Anmeldenummer: 12713749.5
(22) Anmeldetag: 13.04.2012
(51) Int. Cl.: H02K 23/04, H02K 23/40

(54) **ELEKTROMOTOR**
ELECTRIC MOTOR
MOTEUR ÉLECTRIQUE

(30) Priorität: 04.05.2011 DE 102011075197
(43) Veröffentlichungstag der Anmeldung: 12.03.2014
(73) Patentinhaber: Robert Bosch GmbH, 70442 Stuttgart (DE)
(72) Erfinder: ROOS, Gerald, 77855 Achern (DE)
(86) Internationale Anmeldenummer: PCT/EP2012/056795
(87) Internationale Veröffentlichungsnummer: WO 2012/150115

(56) Entgegenhaltungen:
- EP-A1- 0 096 868
- EP-A1- 0 339 584
- DE-A1- 19 845 370
- JP-A- H02 223 346
- US-A1- 2010 060 096

## Beschreibung

### Technisches Gebiet

Die Erfindung betrifft im Allgemeinen Elektromotoren und insbesondere Gleichstrommotoren.

### Stand der Technik

Bürstenkommutierte Gleichstrommotoren sind im Stand der Technik in vielfältigen Varianten bekannt. Insbesondere Innenläufer-Gleichstrommotoren werden in vielen Bereichen eingesetzt.

Eine häufige Variante des Innenläufer-Gleichstrommotors ist beispielsweise in den Druckschriften US 4,372,035 und DE 10 2009 033 623 A1 offenbart. US 4,372,035 zeigt einen Elektromotor mit vier Statorpolen, die jeweils um 90° zueinander versetzt um einen drehbaren Läufer angeordnet sind. Die Statorpole umfassen zwei einander bezüglich des Läufers gegenüberliegende Statorpole, die mit Permanentmagneten ausgebildet sind, und zwei einander gegenüberliegenden Statorpole, die als nicht mit Permanentmagneten versehene Polschuhe ausgebildet sind. Diese Anordnung wird Folgepolanordnung genannt und hat den konstruktiven Vorteil, dass die Anzahl der Permanentmagnete gegenüber Elektromotoren, bei denen jeder Statorpol mit einem Permanentmagneten gebildet wird, reduziert ist.

Auch aus der DE 10 2009 033 623 A1 ist ein derartiger Elektromotor bekannt. Dort wird zudem vorgeschlagen, den Luftspalt zwischen den Folgepolen des Stators und dem Anker des Läufers geringer zu gestalten als den Luftspalt zwischen dem Permanentmagnetpol und dem Anker, um den magnetischen Fluss zu maximieren. Weiterhin können dadurch die Luftspalte entsprechend den geometrischen Toleranzen minimiert werden. Daraus ergibt sich der Vorteil, dass dort die Magnettoleranz in der Toleranzkette nicht berücksichtigt werden muss.

Bei der Herstellung von Elektromotoren treten in der Regel Fertigungstoleranzen auf. Diese können beispielsweise durch die Positioniertoleranzen von Lagern, die den Läufer halten, durch Abweichungen bei der Anordnung der Folgepole bzw. der Permanentmagneten, durch Abweichungen der Ankergeometrie des Läufers und dergleichen hervorgerufen werden und können zu einer Exzentrizität des Läufers bzw. des Ankers des Läufers im Polgehäuse bezüglich der Statorpole führen, wodurch die Feldverteilung in den Luftspalten asymmetrisch wird. Als Folge können radiale Kräfte entstehen, die mit der Nutfrequenz (abhängig von der Anzahl der Läuferpole und der Drehzahl) und mit Frequenzen höherer Ordnung variieren. Eine störende Geräuschentwicklung beim Betrieb des Elektromotors kann dadurch hervorgerufen werden.

Es ist daher Aufgabe der vorliegenden Erfindung, bei einem Gleichstromelektromotor mit Folgepolanordnung Maßnahmen vorzusehen, die zu einer Verringerung der Geräuschentwicklung führen, insbesondere wenn eine Exzentrizität des Läufers bezüglich der Statorpole, z. B. aufgrund von Fertigungstoleranzen, aufgetreten ist.

Mit der EP 0339584 A1 ist eine elektrische Maschine bekannt geworden, die als Starterpole sowohl Permanentmagnete als auch Hilfspole aus einem magentisch leitenden Material aufweist. Diese Hilfspole sind in Umfangsrichtung an einer Ecke abgeschrägt, so dass sich der Spalt zwischen den Hilfspolen und dem Rotor aufweitet.

Die US 2010/060096 A1 zeigt einen Elektromotor mit einen Stator, an dem einerseits teilkreisförmige Permanentmagnete und dazwischen Folgepole des Polgehäuses ausgebildet sind. Die Folgepole werden hierbei durch eine ebene Innenfläche des Polgehäuses gebildet, so dass der Spalt zwischen Folgepol und Rotor über den Umfang variiert.

Die JPH02223346 A beschreibt eine elektrische Maschine, bei der in einer Ausführung im Polgehäuse nur ein einziger schalenförmiger Permanentmagnet angeordnet ist. Dadurch bildet der Rest des im wesentlichen zylindrischen Polgehäuses einen Folgepol aus, dessen radialer Spalt zum Rotor größer ist, als der Spalt zwischen dem Permanentmagneten und dem Rotor.

In der EP 0096868 A1 ist ein Innenläufer-Elektromotor mit einem Stator dargestellt, bei dem der Innendurchmesser der Hilfspole größer ist als der Innendurchmesser der Permanentmagnetpole.

### Offenbarung der Erfindung

Diese Aufgabe wird durch den Elektromotor gemäß Anspruch 1 gelöst.

Weitere vorteilhafte Ausgestaltungen der vorliegenden Erfindung sind in den abhängigen Ansprüchen angegeben.

Gemäß einem ersten Aspekt ist ein Elektromotor vorgesehen. Der Elektromotor umfasst:
- eine Statoranordnung mit einer geraden Anzahl von in einer Umfangsrichtung angeordneten Statorpolen, die Permanentmagnet-Statorpole und Folgepole in einer Folgepolanordnung umfassen,
- einen Läufer mit einem Anker, der so bezüglich der Statorpole angeordnet ist, dass eine zu den Statorpolen gerichtete Außenfläche mit den Permanentmagnet-Statorpolen Permanentmagnetluftspalte und mit den Folgepolen Folgepolluftspalte ausbildet,
wobei die Breite der Folgepolluftspalte größer ist als die Breite der Permanentmagnetluftspalte.

Der obige Elektromotor führt zu einer verringerten Sensitivität des Systems bezüglich einer aufgrund von Fertigungstoleranzen auftretenden Exzentrizität des Läufers bezüglich des Stators in Richtung der Anordnung der Folgepole. Dies wird dadurch erreicht, dass der Folgepolluftspalt zwischen dem Anker des Läufers und den Folgepolen größer dimensioniert wird als der Permanentmagnetluftspalt zwischen dem Anker des Läufers und den Permanentmagnet-Statorpolen. Dies trägt der Tatsache Rechnung, dass beim Folgepolmotor die Sensitivität des Systems bezüglich einer Abweichung der Position des Läufers in Richtung der Permanentmagnete geringer ist als in Richtung der Anordnung der Folgepole.

Eine Exzentrizität in Richtung der Permanentmagnet-Statorpole erhöht die Scherung an einem Permanentmagnet-Statorpol und reduziert diese an dem diesem gegenüberliegenden Permanentmagnet-Statorpol, wodurch sich nur eine kleine Flussdifferenz zwischen den beiden Permanentmagneten ergibt. Dagegen geht eine Exzentrizität in Richtung der Anordnung der Folgepole proportional in den magnetischen Widerstand zwischen den Ankern des Läufers und dem Polgehäuse ein, was bei gleichen Breiten der Luftspalte einer deutlich stärkeren Abhängigkeit der Flussdifferenz in den Luftspalten an den Folgepolen von einer relativen Abweichung der Größen der Luftspalte entspricht. Beispielsweise ergibt sich bei Halbierung eines Permanentmagnetluftspalts (und entsprechender Vergrößerung des gegenüberliegenden Permanentmagnetluftspalts) eine Flussdifferenz zwischen den beiden Permanentmagnetluftspalten von nur ca. 10%, während sich bei einer Halbierung des Luftspalts zu einem Folgepol ein Widerstandsverhältnis von 3:1 ergibt und somit eine große Flussdifferenz zwischen den beiden Folgepolen auftritt.

Durch Vergrößern des Luftspalts in Richtung der Anordnung der Folgepole kann daher diese Sensitivität des Elektromotors reduziert werden.

Weiterhin kann die Statoranordnung vier Statorpole aufweisen.

Es kann vorgesehen sein, dass die Statoranordnung ein Polgehäuse aufweist, das eine Innenausnehmung zur Aufnahme des Läufers aufweist.

Die Permanentmagnete können so angeordnet sein, dass sie mit gleicher Polarität in Richtung eines Läufers weisen.

Erfindungsgemäß ist die Breite der Folgepolluftspalte maximal so groß gewählt, dass eine Flussdifferenz zwischen den magnetischen Flüssen durch die Folgepolluftspalte von gegenüberliegenden Folgepolen bei einer vorgegebenen Exzentrizität größer ist als die bei der vorgegebenen Exzentrizität in Richtung der Anordnung der Permanentmagnete hervorgerufene Flussdifferenz zwischen den magnetischen Flüssen durch die Permanentmagnetluftspalten gegenüberliegender Permanentmagnet-Statorpole.

Weiterhin kann der Läufer mit einer Läuferwicklung versehen sein, die über einen Kommutator bestrombar ist.

Insbesondere kann der Anker des Läufers zehn Läuferzähne aufweisen.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Querschnittsdarstellung durch einen vierpoligen Folgepolmotor mit Innenläufer; und
- Figur 2: ein Diagramm zur Darstellung des Verlaufs der Flussdifferenzen über Exzentrizitäten in Richtung der Anordnung der Permanentmagnet-Statorpole und in Richtung der Anordnung der Folgepole.

### Beschreibung von Ausführungsformen

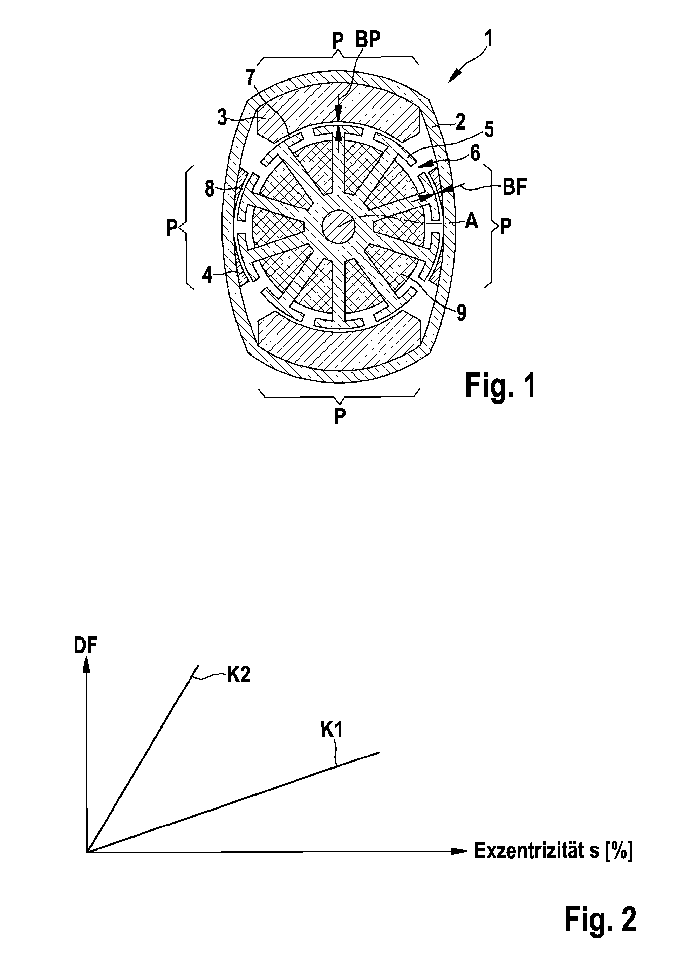

Figur 1 zeigt eine schematische Querschnittsdarstellung eines Elektromotors 1, der als bürstenkommutierter Gleichstrommotor ausgebildet ist. Der Elektromotor 1 weist ein Polgehäuse 2 als Statoranordnung auf, in dem vier Statorpole P ausgebildet sind. Das Polgehäuse 2 ist aus einem magnetisch leitenden Material gefertigt und hat eine im Wesentlichen zylindrische Form mit einer Innenausnehmung zur Aufnahme eines Läufers 6.

Zwei einander gegenüberliegende Permanentmagnet-Statorpole P sind mit Permanentmagneten 3 ausgebildet. Die Permanentmagnet-Statorpole P liegen einander gegenüber und weisen eine gleiche Polung in Richtung zu einer Mittenachse A auf. Beispielsweise können die zur Mittenachse A gerichteten Magnetpole der Permanentmagneten 3 einem magnetischen Nordpol entsprechen. Vorzugsweise sind die Permanentmagnete 3 aus einem hartmagnetischen Material ausgebildet, wie beispielsweise Materialen mit Seltenen-Erden-Bestandteilen.

Weiterhin sind weitere Statorpole als Folgepole 4 ausgebildet und durch einen Bereich des Polgehäuses 2 definiert, der durch seine Nähe zu einem Anker des Läufers 6 magnetisch wirksam mit diesem gekoppelt ist.

Der Läufer 6 ist an einer Welle befestigt, die sich entlang der Mittenachse A erstreckt und drehbar um diese angeordnet ist. Der Läufer umfasst einen Anker mit Läuferzähnen 5, die in radialer Richtung zu dem Polgehäuse 2 von der Welle abstehen. Der äußere Umfang des Ankers des Läufers 6 wird von Zahnköpfen definiert, die Verbreiterungen der Läuferzähne darstellen, und bildet zudem mit dem Permanentmagnet-Statorpol einen Permanentmagnetluftspalt 7 und mit den Folgepolen 4 einen Folgepolluftspalt 8 aus.

Der Läufer 6 trägt eine Läuferwicklung 9 mit mehreren Läuferspulen, die um die Läuferzähne 5 gewickelt sind. Ein nicht gezeigter Kommutator, der axial versetzt zu dem Anker des Läufers 6 angeordnet ist, dient dazu, die Läuferspulen zu bestromen. Der Kommutator ist so ausgebildet, dass die Bestromung der Läuferspulen so erfolgt, dass die Läuferzähne 5 ein magnetisches Feld erzeugen, das zum Antreiben des Läufers 6 in einer gewünschten Drehrichtung führt.

Beim Aufbau eines derartigen Elektromotors 1 kommt es in der Regel aufgrund von Positionierabweichungen, insbesondere des Lagers, das die Welle des Läufers 6 lagert, zu einer Exzentrizität des Läufers 6 bezüglich der von dem Polgehäuse 2 geformten Innenausnehmung des Polgehäuses 2, so dass die einander gegenüberliegenden Luftspalte 7, 8 verschiedenen Breiten BP, BF aufweisen können.

Figur 2 zeigt ein Diagramm, das die Verläufe der Flussdifferenz DF zwischen den Permanentmagnetluftspalten 7 und der Flussdifferenz zwischen den Folgepolluftspalten 8 abhängig von der relativen Abweichung s von einer mittigen Anordnung des Läufers bezüglich der Statorpole P darstellt. Liegt eine Exzentrizität des Läufers in Richtung der Anordnung der Permanentmagnet-Statorpole vor (dargestellt durch Kurve K1), so ist die Scherung an einem Permanentmagnet-Statorpol erhöht und am anderen reduziert. Der Gradient der Flussdifferenz DF zwischen den durch die Permanentmagnetluftspalte 7 fließenden magnetischen Flüssen bezüglich der Exzentrizität ist dabei jedoch gering.

In einem Ausführungsbeispiel beträgt bei einer relativen Abweichung der Lage des Läufers 6 von 50% die Abhängigkeit der Flussdifferenz DF nur ca. 10% des Flusses ohne Exzentrizität in diese Richtung, d. h. bei einer Breite BP des Permanentmagnetluftspalts 7 von 0,5 mm bewirkt eine Exzentrizität von 0,25 mm in Richtung der Anordnung der Permanentmagnet-Statorpole nur eine Flussdifferenz, die 10% der Flussdifferenz DF ohne Exzentrizität entspricht, so dass die Entstehung von Radialkräften beim Betrieb des Elektromotors 1 auch bei hohen Exzentrizitäten in Richtung der Anordnung der Permanentmagnetluftspalte 7 gering sind.

Wie aus dem Diagramm der Figur 2 weiter ersichtlich, ist die Sensitivität der Flussdifferenz DF bezüglich einer Exzentrizität s in Richtung der Anordnung der Folgepole 4 höher (dargestellt in Kurve K2) als in Richtung der Anordnung der Permanentmagnet-Statorpole, da die Exzentrizität proportional in den magnetischen Widerstand zwischen den Läuferzähnen 5 und dem Polgehäuse 2 eingeht. Die Exzentrizität wird prozentual von der Breite BP, BF des Luftspalts bei nicht exzentrischer Lagerrung des Läufers 6 angegeben. Bei Halbierung der Breite eines Luftspalts und entsprechender Erhöhung der Breite des diesem gegenüberliegenden Luftspalts um das 1,5-fache ergibt sich ein Widerstandsverhältnis von 3:1 und somit eine große Flussdifferenz DF zwischen den beiden Folgepolluftspalten. Dies führt zu hohen variierenden Radialkräften während des Betriebs und somit zu einer verstärkten Geräuschentwicklung.

Während beispielsweise die Empfindlichkeit DF/ds der Flussdifferenz bezüglich einer relativen Abweichung in Richtung der Anordnung der Permanentmagnet-Statorpole 0,2 beträgt, beträgt die Empfindlichkeit in Richtung der Anordnung der Folgepole 4 1/s, wobei die Größe s als relative Abweichung, die ein Maß für die Exzentrizität darstellt, definiert ist. Die Größe s ergibt sich als Verhältnis der Spaltbreite des vergrößerten Luftspaltes zu der Spaltbreite des verkleinerten Luftspalts. Beispielsweise ergibt sich eine Exzentrizität von 1/3 bei einem Luftspalt von 0,5 mm und einer Abweichung von der Symmetrie von 0,25 mm. Somit kann festgestellt werden, dass die Abhängigkeit der Flussdifferenz zwischen den magnetischen Flüssen der Folgepolluftspalten 8 von Verschiebungen in Richtung der Anordnung der Folgepole 4 deutlich höher ist als die Abhängigkeit der Flussdifferenz zwischen den magnetischen Flüssen der Permanentmagnetluftspalte 8 von Verschiebungen in Richtung der Anordnung der Permanentmagnet-Statorpole.

Um diese Abhängigkeit zu reduzieren, wird daher vorgeschlagen, den Folgepolluftspalt 8 zu vergrößern und insbesondere größer als den Permanentmagnetluftspalt 7 auszubilden. Die Vergrößerung des Folgepolluftspalts 8 ist sinnvoll bis zu einer Größe, bei der die Empfindlichkeit DF/ds bezüglich Fertigungstoleranzen, d. h. bezüglich Abweichungen von der Symmetrie, den gleichen Einfluss auf die Flussdifferenz hat, den die gleiche Abweichung von der Exzentrizität in Richtung der Anordnung der Permanentmagnete 3 hat.

## Patentansprüche

1. Elektromotor (1) umfassend:
- eine Statoranordnung (2) mit einer geraden Anzahl von in einer Umfangsrichtung angeordneten Statorpolen (P), die Permanentmagnet-Statorpole (P) und Folgepole (4) in einer Folgepolanordnung umfassen,
- einen Läufer (6) mit einem Anker, der so bezüglich der Statorpole angeordnet ist, dass eine zu den Statorpolen (P) gerichtete Fläche mit den Permanentmagnet-Statorpolen Permanentmagnetluftspalte (8) und mit den Folgepolen (4) Folgepolluftspalte (7) ausbildet,
**wobei**
die Breite (BF) der Folgepolluftspalte (8) größer ist als die Breite (BP) der Permanentmagnetluftspalte (7), **dadurch gekennzeichnet, dass die Breite (BF) der Folgepolluftspalte (8) maximal so groß gewählt ist, dass eine Flussdifferenz zwischen den magnetischen Flüssen durch die Folgepolluftspalte (8) von gegenüberliegenden Folgepolen (4) bei einer vorgegebenen Exzentrizität größer ist als die bei der vorgegebenen Exzentrizität in Richtung der Anordnung der Permanentmagnete (3) hervorgerufene Flussdifferenz zwischen den magnetischen Flüssen durch die Permanentmagnetluftspalten (8) gegenüberliegender Permanentmagnet-Statorpole.**

2. Elektromotor (1) nach Anspruch 1, wobei die Statoranordnung (2) vier Statorpole (P) aufweist.

3. Elektromotor (1) nach Anspruch 1 oder 2, wobei die Statoranordnung (2) ein Polgehäuse aufweist, das eine Innenausnehmung zur Aufnahme des Läufers (6) aufweist.

4. Elektromotor (1) nach einem der Ansprüche 1 bis 3, wobei die Permanentmagnet-Statorpole (P) mit einem oder mehreren Permanentmagneten versehen sind, wobei die Permanentmagnete (3) eine gleiche Polarität in Richtung eines Läufers weisen.

5. Elektromotor (1) nach einem der Ansprüche 1 bis 4, wobei **die Breite (BP) der Permanentmagnetluftspalte (7) 0,5 mm beträgt.**

6. Elektromotor (1) nach einem der vorhergehenden Ansprüche, wobei der Läufer (6) mit einer Läuferwicklung (9) versehen ist, die über einen Kommutator bestrombar ist.

7. Elektromotor (1) nach einem der vorhergehenden Ansprüche, wobei der Anker des Läufers (6) zehn Läuferzähne (5) aufweist.

## Claims

1. Electric motor (1) comprising:
- a stator arrangement (2) having an even number of stator poles (P) which are arranged in a circumferential direction and comprise permanent-magnet stator poles (P) and consequent poles (4) in a consequent-pole arrangement,
- a rotor (6) having an armature which is arranged in relation to the stator poles such that a surface which is directed towards the stator poles (P) forms permanent-magnet air gaps (7) with the permanent-magnet stator poles and forms consequent-pole air gaps (8) with the consequent poles (4),
wherein
the width (BF) of the consequent-pole air gaps (8) is greater than the width (BP) of the permanent-magnet air gaps (7), **characterized in that** the width (BF) of the consequent-pole air gaps (8) is selected at most such that a flux difference between the magnetic fluxes through the consequent-pole air gaps (8) of opposite consequent poles (4) given a prespecified eccentricity is greater than the flux difference, which is caused given the prespecified eccentricity in the direction of the arrangement of the permanent magnets (3), between the magnetic fluxes through the permanent-magnet air gaps (7) of opposite permanent-magnet stator poles.

2. Electric motor (1) according to Claim 1, wherein the stator arrangement (2) has four stator poles (P).

3. Electric motor (1) according to Claim 1 or 2, wherein the stator arrangement (2) has a pole housing which has an inner recess for receiving the rotor (6).

4. Electric motor (1) according to one of Claims 1 to 3, wherein the permanent-magnet stator poles (P) are provided with one or more permanent magnets, wherein the permanent magnets (3) have an identical polarity in the direction of a rotor.

5. Electric motor (1) according to one of Claims 1 to 4, wherein the width (BP) of the permanent-magnet air gaps (7) is 0.5 mm.

6. Electric motor (1) according to one of the preceding claims, wherein the rotor (6) is provided with a rotor winding (9) which can be supplied with current by means of a commutator.

7. Electric motor (1) according to one of the preceding claims, wherein the armature of the rotor (6) has ten rotor teeth (5).

## Revendications

1. Moteur électrique (1) comprenant :
- un agencement de stator (2) avec un nombre pair de pôles statoriques (P) disposés dans une direction périphérique, qui présentent des pôles statoriques à aimants permanents (P) et des pôles suiveurs (4) dans un agencement de pôles suiveurs,
- un rotor (6) avec un induit qui est disposé par rapport aux pôles statoriques de telle sorte qu'une surface orientée vers les pôles statoriques (P) constitue avec les pôles statoriques à aimants permanents un entrefer d'aimants permanents (7) et avec les pôles suiveurs (4) un entrefer de pôles suiveurs (8), la largeur (BF) de l'entrefer de pôles suiveurs (8) étant plus grande que la largeur (BP) de l'entrefer d'aimants permanents (7),
**caractérisé en ce que** la largeur (BF) de l'entrefer de pôles suiveurs (8) est choisie au maximum avec une dimension telle qu'une différence de flux entre les flux magnétiques à travers l'entrefer de pôles suiveurs (8) de pôles suiveurs opposés (4) dans le cas d'une excentricité prédéterminée soit supérieure à la différence de flux entre les flux magnétiques à travers les entrefers d'aimants permanents (7) de pôles statoriques d'aimants permanents opposés provoquée dans le cas de l'excentricité prédéterminée prédéfinie dans la direction de l'agencement des aimants permanents (3).

2. Moteur électrique (1) selon la revendication 1, dans lequel l'agencement statorique (2) présente quatre pôles statoriques (P).

3. Moteur électrique (1) selon la revendication 1 ou 2, dans lequel l'agencement statorique (2) présente un boîtier de pôles qui présente un évidement interne pour recevoir le rotor (6).

4. Moteur électrique (1) selon l'une quelconque des revendications 1 à 3, dans lequel les pôles statoriques d'aimants permanents (P) sont pourvus d'un ou de plusieurs aimants permanents, les aimants permanents (3) présentant une même polarité dans la direction d'un rotor.

5. Moteur électrique (1) selon l'une quelconque des revendications 1 à 4, dans lequel la largeur (BP) des entrefers d'aimants permanents (7) est de 0,5 mm.

6. Moteur électrique (1) selon l'une quelconque des revendications précédentes, dans lequel le rotor (6) est pourvu d'un enroulement (9) de rotor qui peut être parcouru par le courant d'un collecteur.

7. Moteur électrique (1) selon l'une quelconque des revendications précédentes, dans lequel l'induit du rotor (6) présente dix dents (5) de rotor.
